# EUROPÄISCHE PATENTSCHRIFT

(11) **EP 3 270 103 B1**
(45) Veröffentlichungstag und Bekanntmachung des Hinweises auf die Patenterteilung: **01.09.2021**
(21) Anmeldenummer: 16179094.4
(22) Anmeldetag: 12.07.2016
(51) Int. Cl.: G01B 11/25, B29C 35/08

(54) **VERFAHREN ZUR VERARBEITUNG VON OBJEKTEN SOWIE VORRICHTUNG UND DEREN VERWENDUNG**
METHOD FOR PROCESSING OBJECTS AND DEVICE AND USE THEREOF
PROCÉDÉ DE TRAITEMENT D'OBJETS ET DISPOSITIF ET SON UTILISATION

(43) Veröffentlichungstag der Anmeldung: 17.01.2018
(73) Patentinhaber: Airbus Defence and Space GmbH, 82024 Taufkirchen (DE)
(72) Erfinder: ORTH, Tilman, 80469 München (DE); GRÜNEWALD, Jonas, 81457 München (DE); WEIMER, Christian, 81539 München (DE)
(74) Vertreter: Isarpatent

(56) Entgegenhaltungen:
- DE-A1-102014 018 934
- DE-A1-102015 013 697
- US-A1- 2015 083 933

## Beschreibung

Die Erfindung betrifft ein Verfahren zur Verarbeitung von Objekten, insbesondere von Objekten in einem Produktionsablauf, in verschiedenen Verarbeitungsschritten. Außerdem betrifft die Erfindung auch eine Vorrichtung zur Verarbeitung von Objekten, mit welcher insbesondere das erwähnte Verfahren durchgeführt werden kann sowie deren Verwendung in einem Produktionsverfahren.

Die Bestrahlung von Objekten oder sogar Menschen wird heute universell eingesetzt, in Industrie, Handwerk, Haushalt, Freizeit oder Medizin. Insbesondere werden Bestrahlungsvorgänge an verschiedenen Stellen in industriellen Prozessen eingesetzt, z.B. zum Erwärmen von Halbzeugen oder Aktivieren chemischer Reaktionen. Um die dafür benötigte Strahlungsverteilung, i.d.R. eine homogene Verteilung, zu erreichen, ist eine spezielle Vorrichtung nötig, die auf jeweils ein bestimmtes Bauteil, eine bestimmte Geometrie ausgelegt ist. Um eine solche Vorrichtung auf unterschiedliche Bauteile/Geometrien anzupassen, ist ein menschlicher Eingriff erforderlich.

Die DE 102015013697 A1 offenbart ein Verfahren zum Zuführen von Lichtenergie von einer Licht emittierenden Vorrichtung hauptsächlich entlang einer ersten Achse; Erfassen der Lichtenergie mit einer Lichterfassungsvorrichtung, die entlang einer zweiten Achse ausgerichtet ist, wobei die zweite Achse im Wesentlichen orthogonal zu der ersten Achse ausgerichtet ist; und Anpassen der Lichtenergie als Reaktion auf die erfasste Lichtenergie. Außerdem kennt man aus der US 2015/0083933 A1 eine Aushärtevorrichtung mit einem ersten LED-Array, bei dem jede der LEDs dieses ersten Arrays im Wesentlichen auf eine Quantenpunkt-Schicht zentrierte Strahlung einer ersten Anregungswellenlänge ausstrahlt, wobei die Quantenpunkt-Schicht oberhalb des ersten Arrays von LEDs angeordnet und dazu eingerichtet ist, Strahlung der ersten Anregungswellenlänge teilweise zu absorbieren und diese absorbierte Strahlung zu konvertieren sowie die ausgestrahlte Strahlung erster Wellenlänge teilweise durchzulassen, wobei die konvertierte und die teilweise durchgelassene Strahlung erster Anregungswellenlänge auf ein strahlungshärtbares Werkstück gerichtet sind. Schließlich ist aus der DE 102014018934 A1 eine Licht emittierende Einheit (LEE) mit wenigstens einem Leuchtmittel zur Emission von Licht zum Aufheizen eines Verbundwerkstoffs, etwa Harz eines kohlenstofffaserverstärkten Kunststoffs, bekannt, wobei der Verbundwerkstoff durch das Aufheizen aufgeschmolzen und/oder erweicht und/oder ausgehärtet und/oder flüssig gehalten werden kann. Die Lichtemission des Leuchtmittels ist dabei bereichsweise unterschiedlich steuerbar.

Üblicherweise kommt bei der Bestrahlung des oder der jeweiligen Objekte eine Strahlungsquelle mit einer definierten Abstrahlcharakteristik zum Einsatz. Solche Strahler sind üblicherweise in Feldern angeordnet und in dieser Anordnung fixiert. Diese Felder von Strahlern werden von einem Bediener auf den jeweiligen Einsatz hin konfiguriert. Beispiele sind etwa Infrarotstrahler zum Erwärmen von Halbzeugen, UV-Strahler zum Aushärten von Lacken oder Harzen oder Infrarotstrahler zum Trocknen von Oberflächen. Diese Geräte werden üblicherweise auf die zu bestrahlende Fläche gerichtet, anschließend eingeschaltet und nach Ablauf einer definierten Zeit oder beim Erreichen eines gewissen Messergebnisses wieder abgeschaltet.

Sollen komplexere Geometrien, wie z.B. dreidimensionale Oberflächen mit Vertiefungen, gleichmäßig bestrahlt werden, so ist dies vor dem Einsatz der Bestrahlungseinrichtung zu berücksichtigen, in dem die Konstruktion angepasst oder eine Intensitätsverteilung eingestellt wird. Ursache hierfür ist die Tatsache, dass die auftreffende Strahlungsleistung mit dem Quadrat der Entfernung von der Strahlungsquelle abnimmt, die Leistung also eine Abhängigkeit proportional 1/r² aufweist. Zusätzlich weisen die meisten Strahlungsquellen keine homogene Abstrahlcharakteristik über dem Raumwinkel auf. Weiterhin absorbieren unterschiedliche Materialien elektromagnetische Strahlung bei verschiedenen Wellenlängen unterschiedlich gut. Solche Strahler könne beispielsweise in Zonen geschaltet sein, die einzeln gesteuert werden können. Diese Zonen sind immer mindestens so groß wie eine Strahlungsquelle, in dem oben erwähnten Fall also eine Infrarot-Lampe. Dadurch ergeben sich Ungleichmäßigkeiten in der Verteilung, die für viele Prozesse gegebenenfalls nicht gewünscht sind oder eine Bestrahlung als Prozesstechnologie ausschließen.

Es ist daher die Aufgabe der vorliegenden Erfindung, ein Verfahren und eine Vorrichtung zur Verfügung zu stellen, welche mit einfachen Mitteln und in kostengünstiger Art und Weise eine Vermessung und anschließende Bestrahlung von Objekten gestattet.

Diese Aufgabe wird erfindungsgemäß durch die Merkmale der unabhängigen Ansprüche gelöst. Die Lösung besteht demnach insbesondere darin, bei dem Verfahren mit wenigstens einer Sensoranordnung mit einer Mehrzahl von Sensoren mittels zumindest einer Teilmenge der Sensoren in einem Detektionsmodus als Detektionseinrichtung wenigstens ein Objekt zu vermessen, sodann durch eine Steuereinrichtung unter Berücksichtigung eines Ergebnisses der Vermessung des Objekts eine Beaufschlagung des Objekts mit einer Bestrahlungseinrichtung zu ermitteln und schließlich das Objekt durch zumindest eine weitere Teilmenge der Mehrzahl von Sensoren in einem Bestrahlungsmodus als Bestrahlungseinrichtung zu bestrahlen; gegebenenfalls wird zumindest eines Teils des Verfahrens mit erneuter Vermessung, Ermittlung und/oder Bestrahlung wiederholt.

Gleichermaßen löst die vorstehende Aufgabe auch eine Vorrichtung zur Verarbeitung von Objekten, mit einer Detektionseinrichtung mit wenigstens einer Sensoranordnung mit einer Mehrzahl von Sensoren, wobei mittels zumindest einer Teilmenge der Sensoren in einem Detektionsmodus wenigstens ein Objekt vermisst; wobei eine Steuereinrichtung unter Berücksichtigung eines Ergebnisses der Vermessung des wenigstens einen Objekts eine Beaufschlagung des Objekts mit einer Bestrahlungseinrichtung ermittelt, und wobei zumindest eine weitere Teilmenge der Mehrzahl von Sensoren in einem Bestrahlungsmodus als Bestrahlungseinrichtung das wenigstens eine Objekt bestrahlt.

Erfindungsgemäß werden also Sensoren eingesetzt, um einerseits das später zu bestrahlende Objekt zu vermessen, und dessen Abmessungen zu gewinnen, aus dem Ergebnis dieser Ermittlung die notwendigen Parameter für eine optimale Bestrahlung rechnerisch zu ermitteln und anschließend mit den vormals als Sensoren eingesetzten Strahlungsquellen das betreffende Objekt wie gewünscht zu bestrahlen Die Erfindung beruht also ganz wesentlich auf dem Umstand, dass Strahlungsquellen zum Einsatz kommen, die in der Lage sind, nicht nur als Strahlungsquellen, sondern auch als Detektoren zu wirken.

Weitere vorteilhafte Merkmale beinhalten die Unteransprüche.

Eine vorteilhafte Ausgestaltung des erfindungsgemäßen Verfahrens wie der Vorrichtung, bei welcher die Sensoren als Detektor und als Strahlungsquelle einsetzbar und schaltbar sind, die gut steuerbar ist und eine gute Lichtausbeute liefert, kann darin bestehen, die Sensoren der Sensoranordnung jeweils durch eine Leuchtdiode (LED) auszubilden. Dieser Ansatz beruht darauf, die LEDs zunächst entgegen ihrer Durchlassrichtung aufzuladen und anschließend diejenige Zeit zu messen, die sie für eine vollständige Entladung brauchen. Diese Zeit hängt davon ab, wieviel Lichtenergie dabei auf sie auftrifft. Diese Art der Messung lässt sich bereits mit winzigen Schaltungen umsetzen und bietet dabei eine hervorragende Signal-to-Noise Ratio (S/N). Eine LED kann dabei allerdings in der Regel immer nur Strahlung detektieren, die in einem sehr engen Bereich um die von ihr selbst ausgestrahlte Wellenlänge liegt.

Vorteilhafte Weiterbildungen, die eine gute Handhabung mit den Sensoren der Sensoranordnung gestatten und deren Einsatz flexibel machen können bei Weiterbildungen von erfindungsgemäßem Verfahren und Vorrichtung darin bestehen dass die Sensoren der Anordnung einzeln, zu mehreren gemeinsam und zu Gruppen zusammengefasst ansteuerbar oder angesteuert sind. Die Sensoren der Sensoranordnung können hierbei beispielsweise ein sogenanntes Array von Sensoren bilden, beispielsweise kann ein solches Array mit einzelnen Sensoren, mit Teilemengen von Sensoren oder insgesamt eine regelmäßige Anordnung über eine zu bestrahlende Fläche aufweisen. So kann etwa die Vorrichtung aus einem Feld mit LEDs, die derart verschaltet sind, dass sie sowohl geeignet sind, eintreffenden Lichtstrom zu messen, als auch aktiv als Strahlungsquellen zu fungieren. Solche Felder können etwa ein flächige LED-Module bilden, die sich zum Heizen größerer Bauteile eignen.

Die LEDs sind dazu beispielsweise in dichter Anordnung auf einer Platine montiert. Um eine Oberfläche zu bestrahlen, können nun die LEDs einzeln angesteuert werden und in ihrer Intensität geregelt werden. Im einfachsten Fall ist die zu bestrahlende Oberfläche dabei in etwa parallel zur LED-Platine.

Durch die Anordnung der LEDs ergibt sich, bei gleicher Strahlungsintensität aller LEDs, eine Glockenkurve für die auf die Oberfläche treffende Strahlung über der Breite der Platine, mit einem Maximum in der Mitte und weniger Strahlung im Randbereich. Das Gleiche gilt in der zweiten Dimension. Um eine homogene Einstrahlung auf der Oberfläche zu erreichen, müssen daher die Randbereiche stärker strahlen als die Mitte. Eine solche Verteilung muss üblicherweise in einem Simulationsmodell gerechnet und anschließend von einer Bedienperson in ein Programm umgesetzt werden.

An dieser Stelle setzt die Erfindung an um eine solche Verteilung selbst zu ermitteln. Dazu werden etwa die LEDs in speziellen Mustern angesteuert, beispielsweise als Schachbrettanordnung. Dabei wird beispielsweise die eine Hälfte der LEDs im Detektormodus betrieben, während die andere Hälfte als Strahlungsquelle fungiert. Die strahlenden LEDs senden dabei Strahlung aus, die von der Oberfläche des Bauteils reflektiert wird und von den im Detektormodus befindlichen LEDs gemessen. Für das Beispiel der ebenen Platte würden die Detektor-LEDs im Zentrum deutlich mehr Strahlung detektieren, wenn alle strahlenden LEDs mit gleicher Intensität strahlen. Die gemessenen Werte können von einem Programm gesichert werden. Anschließend kann das Schachbrettmuster umgekehrt und so die Messung vervollständigt werden. Entsprechend bestehen vorteilhafte Varianten des erfindungsgemäßen Verfahrens darin, die Sensoren der Anordnung derart unterschiedlich zu schalten oder anzusteuern, dass eine Teilmenge von Sensoren in einem Detektormodus als Detektoreinrichtung und eine Teilmenge der Sensoren im Bestrahlungsmodus als Bestrahlungseinrichtung betrieben wird, Die erwähnten Betriebsmodi der jeweiligen Teilmengen von Sensoren können dabei nach einem vorbestimmbaren oder vorbestimmten Zeitraum wechseln und die Teilmengen von Sensoren des jeweiligen Modus können ein Muster, insbesondere ein regelmäßiges Muster bilden, beispielsweise das oben bereits erwähnte Schachbrettmuster. Hierbei ist das erwähnte Schachbrettmuster keinesfalls als fixe Anordnung zu verstehen, sondern lediglich ein Beispiel. Theoretisch können alle möglichen Anordnungen und Kombinationen umgesetzt werden. Diese sind dann von einem Computermodell zu errechnen, in dem sämtliche Informationen zu den Strahlungsquellen, wie z.B. ihre Abstrahlcharakteristik (die Intensität über dem Raumwinkel) etc., und andere geometrische Informationen hinterlegt sind. Dadurch können deutlich präzisere Verteilungen gemessen werden.

In vielen Anwendungen vorteilhaft ist eine Variante des Verfahrens, bei der zumindest eine Teilmenge von Sensoren seitens der Steuereinrichtung derart angesteuert wird, dass eine zu bestrahlende Fläche des Objekts mit einer über die Fläche gleichmäßigen Strahlungsintensität beaufschlagt wird

Um bei der Vermessung des wenigstens einen Objekts oder auch mehrerer Objekte Umwelteinflüsse auszuschließen, kann es bei einer weiteren zweckmäßigen Variante des erfindungsgemäßen Verfahrens vorgesehen sein , vor der Vermessung des wenigstens einen Objekts optional eine Kalibrierungsmessung durchzuführen, bei welcher sich die eingesetzten Sensoren, insbesondere alle Sensoren, im Detektionsmodus befinden. Hierdurch wird z.B. in der anschließenden Berechnung der Einfluss der Umgebungsbeleuchtung herausgerechnet.

Denkbar ist im Übrigen auch eine Variante, bei welcher disjunkte Teilmengen von Sensoren als Detektoreinrichtung und als Bestrahlungseinrichtung gleichzeitig betrieben werden.

Um die gewünschte Art und Weise der Bestrahlung des jeweiligen Objekts, die nicht notwendigerweise eine homogene sein muss (häufig aber sein wird), in geeigneter Weise ermitteln zu können, kann eine vorteilhafte Variante des erfindungsgemäßen Verfahrens darin bestehen, eine zu beaufschlagende Bestrahlung des Objekts mit Sensoren in einem Bestrahlungsmodus durch einen iterativen Prozess zu ermitteln, bei dessen Schritten eine Intensitätsgröße der Bestrahlungsbehandlung durch zumindest eine Teilmenge von Sensoren im Detektionsmodus einfach oder mehrfach gemessen und durch die Steuereinrichtung verändert wird oder durch die Steuereinrichtung die Intensitätsgröße der Bestrahlungsbehandlung von mit Sensoren in einem Bestrahlungsmodus analytisch berechnet und festgelegt wird.

Es sind also zwei Vorgehensweisen möglich: Ein Computerprogramm kann in einem iterativen Prozess die Intensität der strahlenden LEDs solange anpassen, bis eine beispielsweise möglichst homogene (oder andere gewünschte) Verteilung von den Detektor-LEDs gemessen wird. Dazu würde die Strahlungsintensität leicht verändert, eine erneute Messung mittels doppelten Schachbrettmusters durchgeführt und anschließend die gemessenen Werte auf ihre Homogenität überprüft werden. Dieser Prozess kann solange fortgesetzt werden, bis ein definiertes Kriterium erreicht wird oder ähnliche bei iterativen Optimierungsprozessen eingesetzte Abbruchkriterien vorliegen. Das Ergebnis ist eine Intensitätsverteilung der beiden überlagerten Muster, die eine Intensitätsverteilung für die eigentliche Bestrahlung ergeben.

Ebenfalls mittels Computerprogramm kann analytisch eine Verteilung berechnet werden. Der Unterschied zu der ersten Variante ist lediglich, dass hier auf den iterativen Vorgang verzichtet wird. Diese Variante erfordert ein deutlich komplexeres Programm, das komplexere mathematische Zusammenhänge abbildet.

Anschließend kann die Bestrahlung mit der errechneten Strahlungsverteilung erfolgen. Die Bestrahlung kann durch gewisse Rahmenbedingungen beeinflusst werden, wie z.B. eine zu erreichende Oberflächentemperatur. Diese würde lediglich als Multiplikator für die berechnete Intensitätsverteilung berücksichtigt. Diese wäre dann beispielsweise die einzige vom Bediener vorzugebene Information.

Herkömmliche Bestrahlungseinrichtungen erfordern für eine definierte Bestrahlung, dass das zu bestrahlende Objekt an einer bestimmten Stelle innerhalb des Feldes von Strahlern positioniert wird, damit auch genau dort bestrahlt wird, wo sich das Objekt tatsächlich befindet. Wird dies nicht eingehalten, so geht ein Teil der Strahlung verloren und ein Teil des Objektes wird nicht wie geplant bestrahlt.

Hier bieten die erfindungsgemäße Vorrichtung sowie das zugeordnete Verfahren r Vorteile. Durch die Detektion zu Beginn des Prozesses kann bestimmt werden, wo sich ein oder mehrere Objekte tatsächlich befinden, also welcher Bereich bestrahlt werden muss. Befindet sich an einer Stelle kein Objekt, so ändert ist dies aus dem Messsignal ersichtlich und dieser Bereich kann ausgespart werden.

Auf diese Weise kann mit einem großen Array von LED-Strahlern als Sensoren auch ein kleines Objekt bestrahlt werden, ohne dass eine Anpassung der Verschaltung oder ähnliches nötig würde.

Ebenso lässt sich dieses übertragen auf eine Anwendung, bei der ein zu bestrahlendes Objekt auf einer andersartigen Oberfläche liegt, z.B. ein Halbzeug in einem Werkzeug. Hier kann mit einer einzelnen LED-Bestrahlungseinrichtung eine Vielzahl verschiedener Halbzeug/Werkzeug Kombinationen optimal bestrahlt werden, ohne dass ein Programm dazu erzeugt werden muss.

Ebenso können neue Objekte ohne vorherige Einrichtung bestrahlt werden.

Ein weiterer Vorteil dieser Eigenschaft kommt in kontinuierlichen Prozessen zum Tragen. In solchen Prozessen werden Objekte, wie z.B. Lebensmittel, Bauteile oder Halbzeuge, an Bestrahlungseinrichtungen vorbei geführt und bestrahlt. Dabei laufen in der Regel mehrere Objekte nebeneinander bzw. die Halbzeuge verfügen über eine gewisse Breite. Beides kann sich während des Prozesses, zwischen Chargen oder auch generell ändern, bspw. um Produktionskapazitäten stets optimal zu betreiben. Dadurch werden auch oft Bereiche im Prozess bestrahlt, die zu diesem Zeitpunkt leer sind, da kein Objekt vorhanden ist. Die erfindungsgemäße Vorrichtung und das Verfahren können dies in geeigneter Weise kompensieren, in dem beim Anlaufen des Prozesses erfasst wird, wo tatsächlich Objekte vorhanden sind, die eine Bestrahlung erfordern. Diese Erfassung kann auch während des Prozesses erfolgen und erfordert keinen menschlichen Eingriff. Dadurch lassen sich Kosten in Form von Energie und Personal sparen.

Unter anderem für solche Szenarien ist es bei einer Ausführung der erfindungsgemäßen Vorrichtung von Vorteil, wenn jeder der Sensoren der Sensoranordnung jeweils zumindest hinsichtlich seiner Abstrahlintensität regelbar ist.

Von besonderer Bedeutung ist der Umstand, dass mittels der erfindungsgemäßen Vorrichtung nebst dem Verfahren die Möglichkeit besteht, dreidimensionale Strukturen homogen zu bestrahlen, und zwar ohne großen Einrichtungs-, Berechnungs- oder Bedienaufwand. Denn durch den Vermessungsvorgang lässt sich das Reflexionsverhalten des Objektes charakterisieren und derart eine Intensitätsverteilung berechnen, die die gewünschten Rahmenbedingungen, wie z.B. eine homogene Bestrahlung, erfüllt. Die von den LEDs im Detektormodus aufgezeichneten Messwerte hängen direkt mit der Entfernung der Oberfläche von den Strahlungsquellen zusammen. Weiterhin haben Winkel in der Oberfläche ebenfalls einen Einfluss auf das gemessene Ergebnis. Über verschiedene Anordnungen der Sensoren/Strahlungsquellen Quellen Verteilung lassen sich auch diese erfassen, so dass eine zweckmäßige Variante des erfindungsgemäßen Verfahrens darin bestehen kann, in dem Vermessungsvorgang durch verschiedene Anordnungsmuster und/oder Schaltmuster der Sensoranordnung und/oder Relativpositionen der Detektionseinrichtung und des zu vermessenden Objekts auch profilierte, nicht ebene Strukturen des Objekts zu erfassen und gegebenenfalls nach entsprechender Berechnung anschließend durch Bestrahlung zu beaufschlagen.

Die Anwendungsmöglichkeiten hierfür sind vielseitig, da so gekrümmte, gestufte, unterbrochene oder Kombinationen der genannten Eigenschaften, Oberflächen wie gewünscht bestrahlt werden können.

Hierfür können Weiterbildungen der Erfindung zweckmäßig sein, bei denen das wenigstens eine Objekt und die Sensoranordnung der Mehrzahl von Sensoren mittels wenigstens einer Stelleinrichtung relativ zueinander beweglich vorgesehen sind. Außerdem können etwa das wenigstens eine Objekt und zumindest eine Teilmenge von Sensoren der Sensoranordnung in Gebrauchsstellung zueinander parallele Flächenabschnitte bilden. Hierzu könnte man sich beispielsweise vorstellen, dass etwa an einer komplexen Geometrie eines Objekts mehrere Durchläufe des Verfahrens durchgeführt werden, bei denen jeweils eine andere Fläche parallel zu einer Sensoranordnung, durch wessen Relativbewegung auch immer, positioniert ist, vermessen wird, die Berechnung ggf. zuvor stattgefundene Bestrahlung mit berücksichtigt wird und anschließend (erneut) bestrahlt wird.

Mit der erfindungsgemäßen Vorrichtung und dem Verfahren können auch weitere Aspekte des Bestrahlungsvorgangs in Form der Oberfläche, sprich des bestrahlten Materials Berücksichtigung finden. Die Reflexionseigenschaften eines Objektes hängen nicht nur von seiner Geometrie, sondern auch vom Material ab. Dabei können die Beschaffenheit der Oberfläche (rau/glatt), die Farbe oder die Struktur eine Rolle spielen.

Hierfür ist es von Vorteil, wenn bei der erfindungsgemäßen Vorrichtung die Sensoren der Sensoranordnung durch Dioden verschiedener Farben gebildet sind. Bevorzugt können hierbei die verschiedenen Farben der Sensoren einen Längenwellenbereich von einigen 100 nm abdecken, insbesondere sich zwischen dem UV-Bereich und dem NIR-Bereich erstrecken.

Während üblicherweise LEDs nur als Strahlungsquellen/Sensoren in einem sehr engen Frequenzband funktionieren, können mit Kombinationen verschiedenfarbiger LEDs auch mehrere Farben abgebildet werden. Zudem sind LEDs auch im UV und NIR Bereich verfügbar.

Während eine Teilmenge von LED-Sensoren einer Farbe strahlt, zeichnet eine andere Teilmenge von Sensoren die reflektierte oder auch transmittierte Strahlung (etwa bei Folien) auf. Durch die Kombination der verschiedenen Sensoren/ Strahlungsquellen lassen sich bereits mit wenigen Wellenlängen breite Spektren des UV-NIR Bereiches abdecken.

Die gewonnen Informationen entsprechen den Ergebnissen eines großflächigen Spektroskops, mit dem statt einzelne kleine Proben ganze Bauteile vermessen werden können.

Anwendungen hierfür sind zunächst Materialcharakterisierungen, Kontaminationsdetektion oder ähnliches.

Vorteilhaft ist insbesondere auch die Verwendung einer erfindungsgemäßen Vorrichtung sowie des Verfahrens zur Verarbeitung von Objekten in einem Produktionsablauf

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in der Zeichnung näher erläutert. In teilweise schematisierter Darstellung zeigen hierbei die
- Fig.1: einen ebenen Draufsicht auf eine erstes Ausführungsbeispiel der Vorrichtung mit einer aus einem LED-Array bestehenden Sensoranordnung, die im Detektormodus und im Bestrahlungsmodus betreibbar ist;
- Fig.2: eine Seitenansicht des Arrays aus der Fig.1, das im Bestrahlungsmodus Strahlung in Richtung einer zu bestrahlenden Oberfläche ausstrahlt;
- Fig.3: eine ebene Draufsicht auf ein weiteres Ausführungsbeispiel der Vorrichtung mit einer aus einem LED-Array bestehenden Sensoranordnung, bei welcher eine Teilemenge der Sensoren im Bestrahlungsmodus betreiben wird, während eine andere Teilmenge der Sensoren im Detektionsmodus betreiben wird;
- Fig.4: eine Seitenansicht eines weiteren Ausführungsbeispiels der Vorrichtung mit einem LED-Array, mit welchem ein dreidimensionales Objekt bestrahlt wird, wobei sich aufgrund des Abstandes von den Strahlungsquellen eine unterschiedliche Intensitätsverteilung auf der Oberfläche des Objektes ergibt.

In allen Figuren sind gleiche bzw. funktionsgleiche Elemente und Vorrichtungen - sofern nichts anderes angegeben ist - mit denselben Bezugszeichen versehen worden.

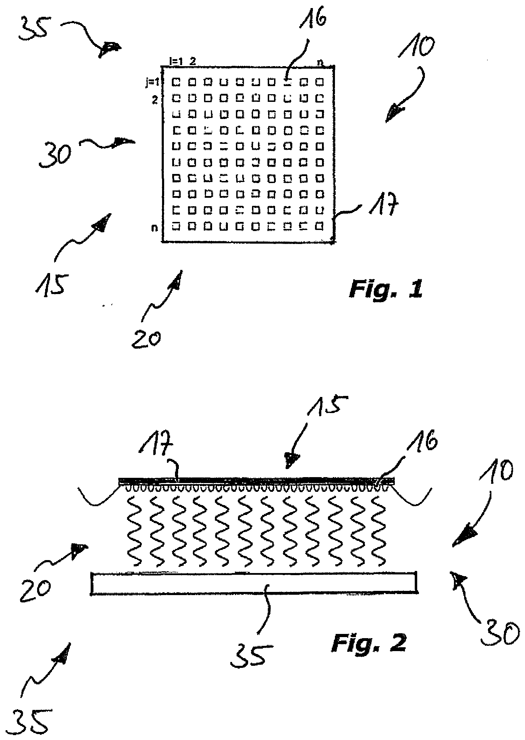

In den Fig.1 bis 4 erkennt man eine im Ganzen mit 10 bezeichnete Vorrichtung zur Verarbeitung von Objekten 35 mit einer Detektionseinrichtung 20 mit wenigstens einer Sensoranordnung 15 mit einer Mehrzahl von Sensoren 16, wobei mittels zumindest eine Teilmenge der Sensoren 16 in einem Detektionsmodus wenigstens ein Objekt 35 vermisst; wobei eine nicht weiter dargestellte Steuereinrichtung unter Berücksichtigung eines Ergebnisses der Vermessung des wenigstens einen Objekts 35 eine durchzuführende Beaufschlagung des Objekts 35 mit einer Bestrahlungseinrichtung 30 ermittelt, und wobei zumindest eine weitere Teilmenge der Mehrzahl von Sensoren 16 in einem Bestrahlungsmodus als Bestrahlungseinrichtung 30 das wenigstens eine Objekt 35 bestrahlt.

Dabei zeigt die Fig.1 ein Ausführungsbeispiel der Vorrichtung 10, bei welcher die Sensoranordnung 15 das aus einem Array von aus LEDs gebildeten Sensoren 16 besteht, die derart verschaltet sind, dass sie sowohl geeignet sind, einen eintreffenden Lichtstrom zu messen, als auch aktiv als Strahlungsquellen zu fungieren. In letztere Funktionsart eigenen sie sich beispielsweise zum Heizen größerer Bauteile als Objekte 35. Die gezeigten Sensoren 16 der Sensoranordnung 15 als LEDs sind dazu in dichter Anordnung auf einer hier quadratischen Platine 17 montiert. Diese ist beispielhaft in der Abbildung dargestellt, die einzelnen LEDs sind über Indizes gekennzeichnet: Um eine Oberfläche zu bestrahlen, können nun die Sensoren 16 /LEDs einzeln angesteuert werden und in ihrer Intensität geregelt werden. Im einfachsten Fall ist die zu bestrahlende Oberfläche parallel zur LED- Platine 17 angeordnet.

Wendet man sich der Fig.2 zu erkennt man die Sensoranordnung 15 der Vorrichtung 10, die ein Objekt 35 in Form einer Oberfläche 35 mit ihren als LEDs ausgebildeten Sensoren 16 bestrahlt. Durch die Anordnung der Sensoren 16 ergibt sich, bei gleicher Strahlungsintensität aller LEDs eine Glockenkurve für die auf die Oberfläche des Objekts 35 treffende Strahlung über der Breite der oben gezeigten Abbildung, mit einem Maximum in der Mitte und weniger Strahlung im Randbereich des Objekts 35. Das Gleiche gilt in der zweiten, sich quer zur Betrachtungsebene in diese hinein erstreckenden Dimension. Um eine homogene Einstrahlung auf der Oberfläche des Objekts 35 zu erreichen, müssen daher die Randbereiche des Arrays von Sensoren 16 stärker strahlen als deren Mitte. Eine solche Verteilung wird in einem Simulationsmodell der nicht dargestellten Steuereinrichtung gerechnet und anschließend in ein Programm umgesetzt.

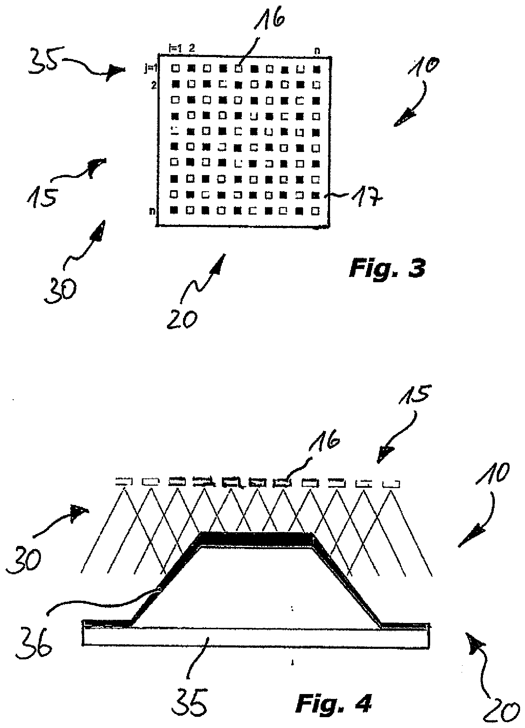

Um eine solche Umsetzung in geeigneter Weise erreichen zu können, wird mit der erfindungsgemäßen Vorrichtung die entsprechende Verteilung selbst ermittelt, wie man gut aus der Fig.3 ersehen kann. In dieser werden die Sensoren 16 an der erneut quadratischen Platine 17 in speziellen Mustern angesteuert, beispielsweise als Schachbrettanordnung. Dabei wird die eine Hälfte der LEDs im Detektormodus betrieben, während die andere als Strahlungsquelle fungiert, was durch die "hellen" Sensoren 16 als Sensoren 16 im Bestrahlungsmodus und durch die "dunklen" Sensoren 16 im Detektionsmodus dargestellt ist.-Die strahlenden LEDs senden dabei Strahlung aus, die von der Oberfläche des Objekts 35 reflektiert wird und von den im Detektormodus befindlichen LEDs gemessen. Nimmt man das Beispiel der ebenen Platte, wie sie etwa in der Fig.2 als Objekt 35 zu sehen ist, würden die Detektor-LEDs als Sensoren 16 im Zentrum deutlich mehr Strahlung detektieren, wenn alle strahlenden LEDs mit gleicher Intensität strahlen. Die gemessenen Werte können von einem Programm gesichert werden.

Anschließend kann das Schachbrettmuster umgekehrt und so die Messung vervollständigt werden. Nach dieser Umkehrung fungieren die Sensoren 16, die zuvor jeweils im Detektormodus arbeiteten, nun als Strahlungsquelle im Bestrahlungsmodus und umgekehrt. Damit bilden die Sensoren 16 der Sensoranordnung 15 jeweils Teilmengen von Sensoren 16, die im vorliegenden Beispiel tatsächlich disjunkt sind, dies aber nicht notwendiger Weise sein müssen.

Anschließend sind mit der Vorrichtung 10 zwei Vorgehensweisen möglich:
a) Ein Computerprogramm kann in einem iterativen Prozess die Intensität der strahlenden LEDs solange anpassen, bis eine möglichst homogene Verteilung von den Detektor-LEDs gemessen wird. Dazu würde die Strahlungsintensität leicht verändert, eine erneute Messung mittels doppelten Schachbrettmusters durchgeführt und anschließend die gemessenen Werte auf ihre Homogenität überprüft werden. Dieser Prozess kann solange fortgesetzt werden, bis ein definiertes Kriterium erreicht wird oder ähnliche bei iterativen Optimierungsprozessen eingesetzte Abbruchkriterien vorliegen. Das Ergebnis ist eine Intensitätsverteilung der beiden überlagerten Muster, die eine Intensitätsverteilung für die eigentliche Bestrahlung ergeben.
b) Ebenfalls mittels Computerprogramm kann analytisch eine Verteilung berechnet werden. Der Unterschied zu der ersten Variante ist lediglich, dass hier auf den iterativen Vorgang verzichtet wird. Diese Variante erfordert ein deutlich komplexeres Programm, das komplexere mathematische Zusammenhänge abbildet. Anschließend kann die Bestrahlung durch die Sensoren 16 als LEDs mit der errechneten Strahlungsverteilung erfolgen.

Der Fig.4 ist schließlich die Möglichkeit zu entnehmen, mittels der erfindungsgemäßen Vorrichtung 10 dreidimensionale Strukturen als Objekt 35 homogen zu bestrahlen, und zwar ohne großen Einrichtungs-, Berechnungs- oder Bedienaufwand, wobei man der Fig.4 auch gleich das üblicherweise dabei vorhandene Problem entnimmt.

Wird nämlich die Oberfläche eines Objekts 35 von einer Strahlungsquelle bestrahlt, so hängt die Bestrahlungsstärke E auf dieser Oberfläche von der Strahlungsintensität und der Entfernung zur Strahlungsquelle ab. Die Strahlungsintensität / ist über dem Raumwinkel konstant (die Abstrahlcharakteristik der Strahlungsquelle wird hierfür gerade nicht berücksichtigt), sodass die Bestrahlungsstärke lediglich vom Abstand zur Strahlungsquelle abhängt, da die über einen gegebenen Raumwinkel bestrahlte Fläche quadratisch mit der Entfernung r von der Quelle zunimmt. Der Zusammenhang lässt sich demnach mit E= *l*/r². cos( • ) formulieren:
Der Cosinus berücksichtigt den Winkel zwischen auftreffender Strahlung und der Flächennormalen, also die projizierte Fläche.

Bei einer entsprechenden Intensitätsverteilung der Strahler lässt sich aber auch bei dreidimensionalen Oberflächen eines Objekts 35 eine homogene Verteilung erreichen. Dazu müssten, wie beispielhaft bereits durch die Ausführungsbeispiele der

Fig.2 und 3 erläutert, wiederum die mittleren Strahler weniger stark strahlen, als die äußeren. Hilfreich ist es dabei, wenn die Sensoren 16 der Sensoranordnung 15 als Strahlungsquellen möglichst klein sind, das realisierbare Raster also möglichst fein ist. Dem kommt der Ansatz LEDs als Sensoren 16 / Strahlungsquellen zu nutzen entgegen.

In der Fig.4 erkennt man hierzu ein Objekt 35 das von Sensoren 16 bestrahlt wird, was durch die regelmäßigen Kegel schematisiert dargestellt ist. Aufgrund des Abstandes von der Quelle ergibt sich eine unterschiedliche Intensitätsverteilung auf der Oberfläche des Objektes 35, die durch die unterschiedlich "dick" eingefärbte Fläche 36 oberhalb der Oberfläche des Objekts 35 angedeutet ist.

Eine solche Intensitätsverteilung zu berechnen erfordert dabei eine genaue Kenntnis der Geometrie des Körpers, sowie der Lage im durch die strahlenden Sensoren 16 verursachten Strahlungsfeld. Der Aufwand hierfür ist nicht gering und erfordert Simulations- und Berechnungssoftware. Eine so errechnete Verteilung ist dann immer nur für eine bestimmte Geometrie des Objekts 35 an einer definierten Position gültig und muss für jede Veränderung neu berechnet werden.

Durch die erfindungsgemäße Vorrichtung 10 eröffnen sich hierbei enorme Verbesserungsmöglichkeiten. Durch den Vermessungsvorgang lässt sich das Reflexionsverhalten des Objektes 35 charakterisieren und so eine Intensitätsverteilung berechnen, die die gewünschten Rahmenbedingungen, wie z.B. eine homogene Bestrahlung, erfüllt. Die von den Sensoren 16 im Detektormodus aufgezeichneten Messwerte hängen direkt mit der Entfernung der Oberfläche des Objekts 35 von den als Strahlungsquellen eingesetzten Sensoren 16 zusammen. Weiterhin haben Winkel in der Oberfläche des Objekts 35 ebenfalls einen Einfluss auf das gemessene Ergebnis. Über verschiedene Anordnungen der Sensoren 16 lassen sich auch diese erfassen. Die Anwendungsmöglichkeiten hierfür sind vielseitig, da so gekrümmte, gestufte, unterbrochene oder Kombinationen der genannten Eigenschaften, Oberflächen wie gewünscht bestrahlt werden können.

Die Erfindung beschreibt demnach eine Vorrichtung 10 und ein Verfahren zum Vermessen, Charakterisieren und Bestrahlen von Objekten 35 , vorzugsweise in Produktionsabläufen. Die Erfindung basiert auf dem Einsatz von LEDs gleichermaßen als Sensoren und als Strahlungsquellen. In einem ersten Funktionsmodus wird ein LED-Array zur Untersuchung eines Objektes 35 genutzt. Aus den gewonnenen Informationen sowie vom Bediener zu definierenden Randbedingungen wird im zweiten Schritt eine Intensitätsverteilung errechnet, die im dritten Schritt von den LEDs erzielt wird. Anwendungsbeispiele sind beispielsweise das Erhitzen geometrisch komplexer Objekte oder das Bestrahlen bestimmter Materialien z.B. lackierter Oberflächen, um chemische Prozesse auszulösen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere ist es möglich, die Erfindung in mannigfaltiger Weise zu verändern der zu modifizieren, ohne vom Kern der Erfindung abzuweichen. Die Erfindung ist jedoch in den Ansprüchen definiert.

### Bezugszeichenliste

- 10: Vorrichtung
- 15: Sensoranordnung
- 16: Sensor
- 17: Platine
- 20: Detektoreinrichtung
- 30: Bestrahlungseinrichtung
- 35: Objekt
- 36: Fläche über Oberfläche als schematisierte Intensität

## Patentansprüche

1. Verfahren zur Verarbeitung von Objekten (35), insbesondere von Objekten (35) in einem Produktionsablauf, mit folgenden Verfahrensschritten:
Vermessen wenigstens eines Objekts (35) mittels einer Teilmenge von Sensoren (16), die wenigstens einer Sensoranordnung (15) mit einer Mehrzahl von Sensoren (16) zugeordnet sind, wobei die Teilmenge von Sensoren sich in einem Detektionsmodus befindet und derart eine Detektionseinrichtung bildet;
Ermitteln einer durchzuführenden Beaufschlagung des wenigstens einen Objekts (35) mittels einer Bestrahlungseinrichtung (30) durch eine Steuereinrichtung unter Berücksichtigung eines Ergebnisses der Vermessung des wenigstens einen Objekts (35); und
Bestrahlen des wenigstens einen Objekts (35) durch zumindest eine weitere,
in einem Bestrahlungsmodus befindliche Teilmenge der Mehrzahl von Sensoren (16), die in diesem Modus eine Bestrahlungseinrichtung (30) bildet;
und
wobei die Sensoren (16) als Detektor und als Strahlungsquelle einsetzbar und schaltbar sind; und
gegebenenfalls eine wiederholte Durchführung zumindest eines Teils des Verfahrens mit erneuter Vermessung, Ermittlung und/oder Bestrahlung.

2. Verfahren nach Anspruch 1, wobei vor der Vermessung des wenigstens einen Objekts (35) optional eine Kalibrierungsmessung durchgeführt wird, bei welcher sich die eingesetzten Sensoren (16), insbesondere alle Sensoren (16), im Detektionsmodus befinden.

3. Verfahren nach Anspruch 1 oder 2, wobei die Sensoren (16) der Anordnung (15) derart unterschiedlich geschaltet oder angesteuert werden, dass zumindest eine Teilmenge von Sensoren (16) in einem Detektormodus als Detektoreinrichtung und zumindest eine Teilmenge der Sensoren (16) im Bestrahlungsmodus als Bestrahlungseinrichtung (30) betrieben wird.

4. Verfahren nach einem der vorhergehenden Ansprüche, wobei die Betriebsmodi der jeweiligen Teilmengen von Sensoren (16) nach einem vorbestimmbaren oder vorbestimmten Zeitraum wechseln.

5. Verfahren nach einem der vorhergehenden Ansprüche, wobei die Teilmengen von Sensoren (16) des jeweiligen Modus ein Muster, insbesondere ein regelmäßiges Muster bilden.

6. Verfahren nach einem der vorhergehenden Ansprüche, wobei disjunkte Teilmengen von Sensoren (16) als Detektoreinrichtung und als Bestrahlungseinrichtung (30) gleichzeitig betrieben werden.

7. Verfahren nach einem der vorhergehenden Ansprüche, wobei eine zu beaufschlagende Bestrahlung des Objekts (35) mit Sensoren (16) in einem Bestrahlungsmodus durch einen iterativen Prozess ermittelt wird, bei dessen Schritten eine Intensitätsgröße der Bestrahlungsbehandlung durch zumindest eine Teilmenge von Sensoren (16) im Detektionsmodus mehrfach gemessen und durch die Steuereinrichtung verändert wird oder durch die Steuereinrichtung die Intensitätsgröße der Bestrahlungsbehandlung von mit Sensoren (16) in einem Bestrahlungsmodus analytisch berechnet und festgelegt wird.

8. Verfahren nach einem der vorhergehenden Ansprüche, wobei zumindest eine Teilmenge von Sensoren (16) seitens der Steuereinrichtung derart angesteuert wird, dass die zu bestrahlende Fläche des Objekts (35) mit einer über die Fläche gleichmäßigen Strahlungsintensität beaufschlagt wird.

9. Verfahren nach einem der vorhergehenden Ansprüche, wobei in dem Vermessungsvorgang durch verschiedene Anordnungsmuster der Sensoranordnung (15) und/oder Relativpositionen der Detektionseinrichtung (20) und des zu vermessenden Objekts (35) auch profilierte, nicht ebene Strukturen des Objekts (35) erfasst werden und gegebenenfalls nach entsprechender Berechnung anschließend durch Bestrahlung beaufschlagt werden.

10. Vorrichtung (10) zur Verarbeitung von Objekten (35), insbesondere von Objekten (35) in einem Produktionsablauf und insbesondere in einem Verfahren nach einem der vorhergehenden Ansprüche, mit einer Steuereinrichtung und mit einer Detektionseinrichtung (20), welche wenigstens eine Sensoranordnung (15) mit einer Mehrzahl von Sensoren (16) aufweist, wobei zumindest eine Teilmenge der Sensoren (16) in einem Detektionsmodus wenigstens ein Objekt (35) vermisst; wobei die Steuereinrichtung unter Berücksichtigung eines Ergebnisses der Vermessung des wenigstens einen Objekts (35) eine durchzuführende Beaufschlagung des Objekts (35) mit einer Bestrahlungseinrichtung (30) ermittelt, und wobei zumindest eine weitere Teilmenge der Mehrzahl von Sensoren (16) in einem Bestrahlungsmodus als Bestrahlungseinrichtung (30) das wenigstens eine Objekt (35) bestrahlt, und wobei die Sensoren (16) als Detektor und als Strahlungsquelle einsetzbar und schaltbar sind, und wobei die Steuereinrichtung eingerichtet ist, die Sensoren (16) anzusteuern.

11. Vorrichtung nach Anspruch 10, wobei die Sensoren (16) der Sensoranordnung (15) jeweils durch eine Leuchtdiode (LED) gebildet sind und/oder jeder der Sensoren (15) der Sensoranordnung (15) jeweils zumindest hinsichtlich seiner Abstrahlintensität regelbar ist, wobei die Sensoren (16) der Sensoranordnung (15) durch Dioden verschiedener Farben gebildet sind.

12. Vorrichtung nach einem der Ansprüche 10 und 11, wobei die Sensoren (16) der Sensoranordnung (15) durch Dioden verschiedener Farben gebildet sind und/oder wobei die verschiedenen Farben der Sensoren (16) einen Längenwellenbereich von einigen 100 nm abdecken, insbesondere sich der Längenwellenbereich zwischen dem UV-Bereich und dem NIR-Bereich erstreckt.

13. Vorrichtung nach einem der Ansprüche 10 bis 12, wobei die Sensoren (16) der Sensoranordnung (15), zu mehreren gemeinsam und/oder zu Gruppen zusammengefasst ansteuerbar oder angesteuert sind und/oder wobei die Sensoranordnung (15) von Sensoren (16) wenigstens ein Array von Sensoren (16) bildet.

14. Vorrichtung nach Anspruch 13, wobei das Array mit einzelnen Sensoren (16), mit Teilmengen von Sensoren (16) oder insgesamt eine regelmäßige Anordnung bezüglich einer zu bestrahlende Fläche aufweist.

15. Vorrichtung nach einem der Ansprüche 10 bis 14, wobei das wenigstens eine Objekt (35) und die Anordnung der Mehrzahl von Sensoren (16) mittels wenigstens einer Stelleinrichtung relativ zueinander beweglich vorgesehen sind und/oder wobei das wenigstens eine Objekt (35) und zumindest eine Teilmenge von Sensoren (16) der Sensoranordnung (15) in Gebrauchsstellung zueinander parallele Flächenabschnitte bilden.

## Claims

1. Method for processing objects (35), in particular objects (35) in a production process, having the following method steps:
measuring at least one object (35) by means of a subset of sensors (16), which are assigned to at least one sensor arrangement (15) having a plurality of sensors (16), wherein the subset of sensors is in a detection mode and in this way forms a detection device;
ascertaining an irradiation of the at least one object (35) to be applied by means of an irradiation device (30) using a control device, taking into account a result of the measurement of the at least one object (35), and
irradiating the at least one object (35) using at least one further subset of the plurality of sensors (16), which subset is in an irradiation mode and, in this mode, forms an irradiation device (30); and
wherein the sensors (16) are usable and switchable as a detector and as a radiation source; and
possibly repeating at least some of the method with another measurement, ascertainment and/or irradiation.

2. Method according to Claim 1, wherein, before the at least one object (35) is measured, optionally a calibration measurement is performed, in which the sensors (16) used, in particular all sensors (16), are in the detection mode.

3. Method according to Claim 1 or 2, wherein the sensors (16) of the arrangement (15) are switched or controlled differently in a manner such that at least one subset of sensors (16) is operated in a detector mode as a detector device and at least one subset of the sensors (16) is operated in the irradiation mode as an irradiation device (30).

4. Method according to one of the preceding claims, wherein the operating modes of the respective subsets of sensors (16) change after a predeterminable or predetermined period of time.

5. Method according to one of the preceding claims, wherein the subsets of sensors (16) of the respective mode form a pattern, in particular a regular pattern.

6. Method according to one of the preceding claims, wherein disjunct subsets of sensors (16) are operated as a detector device and as an irradiation device (30) at the same time.

7. Method according to one of the preceding claims, wherein an irradiation of the object (35) that is to be applied is ascertained with sensors (16) in an irradiation mode by way of an iterative process, and during the steps thereof an intensity quantity of the radiation treatment is measured multiple times by at least one subset of sensors (16) in the detection mode and is changed by the control device or the intensity quantity of the radiation treatment is analytically calculated and defined by with sensors (16) in an irradiation mode using the control device.

8. Method according to one of the preceding claims, wherein at least one subset of sensors (16) is controlled by the control device in a manner such that the surface of the object (35) that is to be radiated is irradiated with a radiation intensity that is uniform over the surface.

9. Method according to one of the preceding claims, wherein, in the measurement operation, profiled, nonplanar structures of the object (35) are also captured and then possibly irradiated, after a corresponding calculation, using different arrangement patterns of the sensor arrangement (15) and/or relative positions of the detection device (20) and of the object (35) to be measured.

10. Apparatus (10) for processing objects (35), in particular objects (35) in a production process, and in particular in a method according to one of the preceding claims, having a control device and having a detection device (20), which has at least one sensor arrangement (15) with a plurality of sensors (16), wherein at least one subset of the sensors (16) in a detection mode measures at least one object (35); wherein the control device ascertains an irradiation of the object (35) to be applied with an irradiation device (30) taking into account a result of the measurement of the at least one object (35), and wherein at least one further subset of the plurality of sensors (16) in an irradiation mode irradiates, as the irradiation device (30), the at least one object (35), and wherein the sensors (16) are usable and switchable as a detector and as a radiation source, and wherein the control device is configured to control the sensors (16).

11. Apparatus according to Claim 10, wherein the sensors (16) of the sensor arrangement (15) are formed in each case by a light-emitting diode (LED) and/or each of the sensors (15) of the sensor arrangement (15) is able to be regulated in each case at least in terms of its emission intensity, wherein the sensors (16) of the sensor arrangement (15) are formed by diodes of different colours.

12. Apparatus according to either of Claims 10 and 11, wherein the sensors (16) of the sensor arrangement (15) are formed by diodes of different colours and/or wherein the different colours of the sensors (16) cover a wavelength range of a few 100 nm, in particular the wavelength range lies between the UV range and the NIR range.

13. Apparatus according to one of Claims 10 to 12, wherein the sensors (16) of the sensor arrangement (15) are controllable or controlled as multiple sensors together or combined in groups, and/or wherein the sensor arrangement (15) of sensors (16) forms at least one array of sensors (16).

14. Apparatus according to Claim 13, wherein the array has with individual sensors (16), with subsets of sensors (16) or overall a regular arrangement with respect to a surface to be radiated.

15. Apparatus according to one of Claims 10 to 14, wherein the at least one object (35) and the arrangement of the plurality of sensors (16) are provided to be movable relative to one another by means of at least one actuating device and/or wherein the at least one object (35) and at least one subset of sensors (16) of the sensor arrangement (15) in a use position form surface sections that are parallel to one another.

## Revendications

1. Procédé de traitement d'objets (35), en particulier d'objets (35) dans un processus de production, comprenant les étapes de procédé suivantes consistant à :
mesurer au moins un objet (35) au moyen d'un sous-ensemble de capteurs (16) qui sont associés à au moins un agencement de capteurs (15) avec une pluralité de capteurs (16), le sous-ensemble de capteurs se trouvant dans un mode détection et formant ainsi un dispositif de détection ;
déterminer une application à effectuer sur ledit au moins un objet (35) au moyen d'un dispositif d'irradiation (30) par un dispositif de commande en tenant compte d'un résultat du mesurage de l'au moins un objet (35) ; et
irradier ledit au moins un objet (35) par au moins un autre sous-ensemble de la pluralité de capteurs (16) se trouvant en mode irradiation et qui constitue un dispositif d'irradiation (30) dans ce mode ; et
les capteurs (16) pouvant être utilisés et commutés comme détecteurs et comme sources de rayonnement ; et
le cas échéant, effectuer de manière répétée au moins une partie du procédé avec un mesurage, une détermination et/ou une irradiation renouvelés.

2. Procédé selon la revendication 1, dans lequel, avant le mesurage de l'au moins un objet (35), une mesure d'étalonnage est effectuée en option, dans laquelle les capteurs (16) utilisés, en particulier tous les capteurs (16), se trouvent en mode détection.

3. Procédé selon la revendication 1 ou 2, dans lequel les capteurs (16) de l'agencement (15) sont commutés ou pilotés différemment de telle sorte qu'au moins un sous-ensemble de capteurs (16) fonctionne dans un mode détecteur comme dispositif détecteur, et au moins un sous-ensemble des capteurs (16) fonctionne en mode irradiation comme dispositif d'irradiation (30).

4. Procédé selon l'une quelconque des revendications précédentes, dans lequel les modes de fonctionnement des sous-ensembles respectifs de capteurs (16) changent selon une période pouvant être ou étant prédéterminée.

5. Procédé selon l'une quelconque des revendications précédentes, dans lequel les sous-ensembles de capteurs (16) du mode respectif constituent un motif, en particulier un motif régulier.

6. Procédé selon l'une quelconque des revendications précédentes, dans lequel des sous-ensembles disjoints de capteurs (16) fonctionnent en même temps comme dispositif détecteur et comme dispositif d'irradiation (30) .

7. Procédé selon l'une quelconque des revendications précédentes, dans lequel une irradiation à appliquer à l'objet (35) est déterminée par des capteurs (16) dans un mode irradiation par un processus itératif, dans les étapes duquel une grandeur d'intensité du traitement d'irradiation est mesurée plusieurs fois par au moins un sous-ensemble de capteurs (16) en mode détection et est modifié par le dispositif de commande, ou le dispositif de commande calcule de manière analytique et définit la grandeur d'intensité du traitement d'irradiation par avec des capteurs (16) dans un mode irradiation.

8. Procédé selon l'une quelconque des revendications précédentes, dans lequel au moins un sous-ensemble de capteurs (16) est piloté par le dispositif de commande de telle sorte qu'une intensité de rayonnement homogène sur la surface est appliquée à la surface à irradier de l'objet (35).

9. Procédé selon l'une quelconque des revendications précédentes, dans lequel, lors de l'opération de mesurage, différents motifs d'agencement de l'agencement de capteurs (15) et/ou différentes positions relatives du dispositif de détection (20) et de l'objet à mesurer (35) permettent de détecter même des structures profilées, non planes, de l'objet (35) et d'y appliquer ensuite une irradiation, le cas échéant après un calcul adéquat.

10. Dispositif (10) de traitement d'objets (35), en particulier d'objets (35) dans un processus de production et en particulier dans un procédé selon l'une quelconque des revendications précédentes, comprenant un dispositif de commande et un dispositif de détection (20) qui présente au moins un agencement de capteurs (15) avec une pluralité de capteurs (15), au moins un sous-ensemble de capteurs (16) mesurant au moins un objet (35) dans un mode détection ; le dispositif de commande déterminant une application à effectuer sur l'objet (35) avec un dispositif d'irradiation (30) en tenant compte d'un résultat du mesurage de l'au moins un objet (35), et au moins un autre sous-ensemble de la pluralité de capteurs (16) irradiant dans un mode irradiation comme dispositif d'irradiation (30) ledit au moins un objet (35), et les capteurs (16) pouvant être utilisés et commutés comme détecteurs et comme sources de rayonnement, et le dispositif de commande étant aménagé pour piloter les capteurs (16).

11. Dispositif selon la revendication 10, dans lequel les capteurs (16) de l'agencement de capteurs (15) sont respectivement formés par une diode électroluminescente (LED), et/ou chacun des capteurs (15) de l'agencement de capteurs (15) est réglable respectivement au moins quant à son intensité de rayonnement, les capteurs (16) de l'agencement de capteurs (15) étant formés par des diodes de différentes couleurs.

12. Dispositif selon l'une quelconque des revendications 10 et 11, dans lequel les capteurs (16) de l'agencement de capteurs (15) sont formés par des diodes de différentes couleurs, et/ou dans lequel les différentes couleurs des capteurs (16) couvrent une gamme de longueurs d'onde de quelques 100 nm, la gamme de longueurs d'onde s'étendant en particulier entre la gamme UV et la gamme NIR.

13. Dispositif selon l'une quelconque des revendications 10 à 12, dans lequel les capteurs (16) de l'agencement de capteurs (15) peuvent être ou sont pilotés en commun à plusieurs et/ou en étant rassemblés par groupes, et/ou dans lequel l'agencement de capteurs (15) de capteurs (16) forme au moins un réseau de capteurs (16).

14. Dispositif selon la revendication 13, dans lequel le réseau présente avec des capteurs individuels (16), avec des sous-ensembles de capteurs (16) ou globalement un agencement régulier par rapport à une surface à irradier.

15. Dispositif selon l'une quelconque des revendications 10 à 14, dans lequel ledit au moins un objet (35) et l'agencement de la pluralité de capteurs (16) sont prévus de manière mobile les uns par rapport aux autres au moyen d'au moins un dispositif de réglage, et/ou dans lequel ledit au moins un objet (35) et au moins un sous-ensemble de capteurs (16) de l'agencement de capteurs (15) forment des parties de surface parallèles les unes aux autres dans la position d'utilisation.
